# EUROPEAN PATENT APPLICATION

(11) **EP 4 725 283 A1**
(43) Date of publication of application: **15.04.2026**
(21) Application number: 25202049.0
(22) Date of filing: 15.09.2025
(51) Int. Cl.: A01B 79/00

(54) **CONTROLLING THE OPERATION OF AN AGRICULTURAL IMPLEMENT OF AN AGRICULTURAL VEHICLE**

(30) Priority: 26.09.2024 US 202463699274 P
(71) Applicant: Agco Corporation, Duluth, Georgia 30096 (US)
(72) Inventor: ROBILLARD, Jerome Matthieu, Jackson, 56143 (US); MURRAY, Timothy Allen, Jackson, 56143 (US)
(74) Representative: AGCO Intellectual Property Department

(57) **Abstract**

A mechanism for controlling the operation of an agricultural implement (110) of an agricultural vehicle (100). A camera (120) of the agricultural vehicle (100) captures a digital image of a target region (195) in the vicinity of the agricultural vehicle (100). A control system (130) of the agricultural vehicle (100) processes the digital image to determine an indicator of plant population in the target region (195). The control system (130) further controls, at least when the agricultural implement (110) is performing the agricultural task in the target region (195), the functioning of the agricultural implement (110) responsive to the indicator of plant population in the target region (195).

## Description

### CROSS-REFERENCE TO RELATED APPLICATIONS

N/A.

### FIELD

Embodiments of the present disclosure relate to agricultural vehicles, and in particular to the control of agricultural implements of agricultural vehicles.

### BACKGROUND

With ever-increasing population numbers and an ongoing interest in more environmentally friendly farming practices, there is a desire to improve the efficiency of performing agricultural processes. Examples of agricultural processes include ploughing, tilling, planting, spraying, fertilizing, harvesting and so on. Each of these activities plays a distinct role in the overall agricultural production cycle and their efficiency directly impacts the productivity and sustainability of farming operations.

During the performance of an agricultural process using an agricultural vehicle, there are a large number of decisions and actions that an operator of the agricultural vehicle needs to perform. In particular, they will need to control the operation of one or more agricultural implements to perform the agricultural process(es). This can create a significant burden upon the operator, and places significant reliance upon the expertise and judgment of the operator to achieve successful outcomes.

There is an ongoing desire to improve the performance of an agricultural process, e.g., with the aim of achieving higher yields, reduced crop loss and/or improved crop quality. Other desirable aims for the outcome of agricultural processes will be apparent.

### BRIEF SUMMARY

According to examples in accordance with this disclosure, there is provided an agricultural vehicle. The agricultural vehicle includes: an agricultural implement configured to perform an agricultural task within an interaction zone in the vicinity of the agricultural vehicle; and a camera configured to capture a digital image of a target region in the vicinity of the agricultural vehicle. The agricultural vehicle further includes a control system configured to process the digital image to determine an indicator of plant population in the target region, and when the interaction zone overlaps the target region, control the operation of the agricultural implement responsive to the predicted indicator of plant population in the target region.

*The proposed approach provides a mechanism for adaptive control of the agricultural implement responsive to detected plant populations. By controlling the functionality of the agricultural implement (and therefore the corresponding agricultural task) responsive to detected plant populations, the agricultural task can be performed more efficiently and effectively, with reduced resource wastage.*

*For instance, where the agricultural implement expends one or more resources (e.g., crop seed*/*plants, fertilizer, pesticides and so on) in performing the agricultural task, then controlling the operation of the agricultural implement can adapt the expenditure of the resource(s) responsive to plant population. This can advantageously reduce resource wastage.*

In some embodiments, the control system is configured to control whether or not the agricultural implement is activated responsive to the predicted indicator of plant population in the target region. *This approach enables selective activation of the implement, functioning to conserve resources and reduce a risk of performing potentially unnecessary agricultural operations in areas with sufficient plant population.*

In some embodiments, when the interaction zone overlaps the target region, the control system is configured to activate the agricultural implement responsive to the predicted indicator of plant population indicating that the plant population in the target region is below a first threshold population, and deactivate the agricultural implement responsive to the predicted indicator of plant population indicating that the plant population in the target region is above the first threshold population.

*This threshold-based activation*/*deactivation allows for targeted treatment of areas with low plant populations while avoiding unnecessary performance of an agricultural task in areas with adequate plant coverage. In this way, a targeted activation of different regions of an agricultural environment is performed responsive to plant population.*

In some embodiments, the indicator of plant population is a measure of predicted plant density in the target region. *Using plant density as an indicator provides a quantifiable metric for assessing plant population and making operational decisions. This approach also facilitates the performance of more granular control over the operation of the agricultural implement and*/*or the agricultural task.*

In some embodiments, the control system is configured to process the digital image using a machine-learning method to generate the indicator of plant population in the target region. *The use of a machine-learning method to perform the processing of the digital image provides an accurate and reliable mechanism for generating the indicator of plant population.*

In some embodiments, the agricultural implement is a planter configured to plant crop. *It has been recognized that proposed approaches are particularly advantageous when exploited to control whether and*/*or how much crop is planted responsive to plant population, e.g., to reduce a risk of overplanting and*/*or to address barren or unsuccessful regions.*

In some embodiments, when the interaction zone overlaps the target region and the agricultural implement is activated, the control system is configured to control a rate of crop planting performed by the agricultural implement responsive to the predicted indicator of plant population in the target region, wherein the rate of crop planting is non-zero. *This approach facilitates dynamic adjustment of planting rates, e.g., to improve crop density responsive to existing plant populations and*/*or prevent or reduce a risk of overcrowding.*

In some embodiments, when the interaction zone overlaps the target region, the control system is configured to control the rate of crop planting performed by the agricultural implement to be greater when the predicted indicator of plant population in the target region indicates a lower plant population than when the predicted indicator of plant population in the target region indicates a higher plant population.

*This inverse relationship between planting rate and existing plant population helps achieve more uniform overall crop density across the field, reducing a risk of overcrowding and increasing a likelihood that crop will grow and mature simultaneously or near-simultaneously.*

In some embodiments, when the interaction zone overlaps the target region, the control system is configured to control the position at which the crop is planted with respect to the agricultural vehicle responsive to the predicted indicator of plant population.

*This capability allows for precise positioning of newly planted crops in relation to existing plants, facilitating improved resource utilization, crop spacing and reducing damage to healthy crops within a target region.*

In some embodiments, when the interaction zone overlaps the target region and the agricultural implement is activated, the control system is configured to plant the crop along one or more first predetermined lines defined with respect to the agricultural vehicle responsive to the predicted indicator of plant population indicating that the plant population in the target region is below a second threshold population, and plant the crop at one or more second predetermined lines defined with respect to the agricultural vehicle responsive to the predicted indicator of plant population indicating that the plant population in the target region is above a second threshold population, wherein each second predetermined line is offset from each first predetermined line.

In some embodiments, each first predetermined line is a line along which existing crop was planted. *This facilitates interplanting or gap-filling in existing crop rows to reduce a risk of damaging existing or healthy crop within the target region.*

In some embodiments, the target region is a region that is ahead of the interaction zone when the digital image is captured by the camera.

In some embodiments, the control system is further configured to determine a time period during which the interaction zone overlaps the target region responsive to at least a travel speed of the agricultural vehicle. In particular, the control system may be configured to only control the agricultural implement, responsive to the indicator of plant population for the target region, during the time period. *This approach allows for precise timing of implement operations responsive* to *the vehicle's movement and the detected plant populations.*

In some embodiments, the camera is fixedly mounted to a remainder of the agricultural vehicle. This *fixed camera mount ensures consistent imaging perspectives, such that the position of the target region with respect to the agricultural vehicle (and therefore the interaction zone) can be trivially derived. This facilitates more accurate tracking of when the interaction zone overlaps the target region.*

In accordance with another aspect of the proposed disclosure, a method is provided for controlling an agricultural implement configured to perform an agricultural task within an interaction zone in the vicinity of an agricultural vehicle. The method includes capturing, using a camera, a digital image of a target region in the vicinity of the agricultural vehicle. The method also includes processing, using a control system, the digital image to determine an indicator of plant population in the target region. The method further includes, when the interaction zone overlaps the target region, controlling, using the control system, the operation of the agricultural implement responsive to the predicted indicator of plant population in the target region.

The method may be adapted to carry out the functions of any herein proposed agricultural vehicle and vice versa.

In some embodiments, controlling the operation of the agricultural implement comprises controlling whether or not the agricultural implement is activated responsive to the predicted indicator of plant population in the target region.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates a first view of an agricultural vehicle;
FIG. 2 illustrates a second view of the agricultural vehicle;
FIG. 3 illustrates a portion of an example agricultural implement; and
FIG. 4 illustrates a proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for controlling the operation of an agricultural implement of an agricultural vehicle. A camera of the agricultural vehicle captures a digital image of a target region in the vicinity of the agricultural vehicle. A control system of the agricultural vehicle processes the digital image to determine an indicator of plant population in the target region. The control system further controls, at least when the agricultural implement is performing the agricultural task in the target region, the functioning of the agricultural implement responsive to the indicator of plant population in the target region.

The present disclosure thereby provides a technique for active image-based monitoring of the environment in the vicinity of the agricultural vehicle to control the operation of the agricultural implement. This image-based monitoring system functions to provide real-time data about crop population conditions, allowing for more precise and responsive control of the agricultural implement.

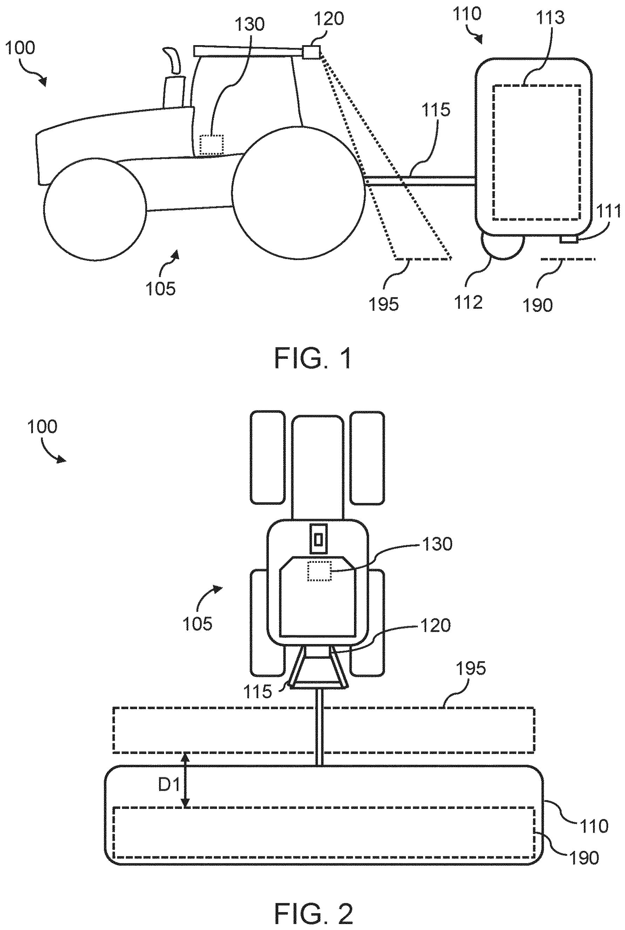

FIGS. 1 and 2 schematically illustrate a proposed agricultural vehicle 100. FIG. 1 provides a side view of the agricultural vehicle. FIG. 2 provides a top-down view of the agricultural vehicle. The illustrated example of an agricultural vehicle 100 takes the form of a tractor towing a trailer carrying agricultural machinery.

The agricultural vehicle 100 comprises an agricultural implement 110 configured to perform an agricultural task within an interaction zone 190 in the vicinity of the agricultural vehicle.

In the illustrated example, the agricultural implement 110 takes the form of a planter configured to plant crop (an example of an agricultural task) within the interaction zone. Here, the agricultural implement comprises a plurality of individual/separate planting units 111 (of which only one is visible in FIG. 1), a wheel 112 and planting apparatus 113. The planting apparatus may, for instance, comprise a hopper for the/each planting unit and/or machinery for controlling the operating of each planting unit. Each planting unit is configurable to plant crop. As used herein a "planter" is a machine for placing seeds in or on the ground and includes planters, seeders and seed drills.

However, embodiments of agricultural implements are not limited to planters. As another example, the agricultural implement may be a plough configured to plough or till (another example of an agricultural task) within the interaction zone. As yet another example, the agricultural implement may be a sprayer configured to apply fertilizer, pesticides, or other agricultural chemicals within the interaction zone. Furthermore, the agricultural vehicle may be a self-contained machine such as a self-propelled and/or fully automated planter. In scenarios where the agricultural vehicle is self-contained, the implement is incorporated into the vehicle. The agricultural vehicle may be a self-propelled and/or fully automated planter wherein the implement is the portion of the machine that places seeds in or on the ground.

In this context, an interaction zone 190 is the region or zone in the vicinity of the agricultural vehicle with which the agricultural implement interacts in order to perform the agricultural task. An alternative label for an interaction zone is a working area or working region of the agricultural vehicle.

It will be appreciated that the interaction zone 190 may vary in size and shape depending on the specific agricultural implement and task being performed. For example, in the case of a planter, the interaction zone may be a narrow strip of soil directly below, behind or beside the agricultural vehicle where seeds/plants are deposited. For a sprayer, the interaction zone may be a wider area extending outward from the sides of the vehicle where chemicals are dispersed.

The agricultural implement 110 may be fixedly secured to the remainder of the agricultural vehicle and/or removably connected thereto, e.g., by a hitch 115 or similar connecting mechanism, as illustrated in Figure 1.

In particular, the agricultural vehicle 100 may comprise a propulsive component 105, such as a tractor, which is coupled to the agricultural implement 110. The propulsive component is configured to control the speed of movement and/or direction of movement of the agricultural vehicle, as is well established in the art.

In other examples, such as in a combine harvester or similar, the agricultural implement is fixedly secured or integrated with the propulsive component.

The agricultural vehicle 100 further comprises a camera 120. The camera is configured to capture a digital image of a target region 195 in the vicinity of the agricultural vehicle 100. Thus, the camera 120 may be positioned to capture images of an area ahead of or around the agricultural vehicle as it moves through a field. More particularly, the digital image captured by the camera 120 contains a representation of the target region. The camera 120 may be mounted on a rear of the vehicle 100, as illustrated in FIG. 1, or may be mounted on another location of the vehicle 100, such as a front of the vehicle, or on the implement 110.

The position and size of the target region may be defined by the position and field of view of the camera 120. More particularly, the target region may be a (portion of a) region represented by the digital image captured by the camera. The position of the region represented by the digital image captured by the camera with respect to the agricultural device can be trivially derived from the known position and/or field of view of the camera.

The agricultural vehicle further comprises a control system 130.

The control system is configured to process the digital image, produced by the camera 120, to determine an indicator of plant population in the target region. Some example approaches for processing the digital image to produce an indicator of plant population are provided later in this disclosure.

In some examples, the indicator of plant population may be an indicator of plant population of a specific, predetermined crop. The control system may therefore be configured to process the digital image to identify and distinguish a particular crop species or variety from other vegetation or plant types in the target region when determining the indicator of plant population. This capability may allow for more targeted and crop-specific agricultural operations.

The indicator of plant population may have a binary, categorical or numeric value. Thus, the indicator of plant population may be a binary, categorical, or numeric indicator of plant population.

A binary indicator may represent the presence or absence of plants in the target region, such as "plants detected" or "no plants detected". As another example, the binary indicator may represent a relative density of plants in the target region, such as "high density" or "low density", which may indicate whether or not a predicted density breaches a predetermined density threshold.

A categorical indicator may classify the plant population in the target region into discrete categories, such as "low", "medium", or "high" density. This may, for instance, indicate into which of a plurality of density bands a plant density of the target region falls.

A numeric indicator may provide a quantitative measure of plant population in the target region, such as an estimated number of plants per unit area (i.e., a measure of plant density) or a percentage of ground cover. Thus, in some examples, the indicator of plant population is a measure of predicted plant density in the target region.

The control system is further configured to, when the interaction zone overlaps the target region, control the operation of the agricultural implement responsive to the indicator of plant population in the target region. The precise control of the agricultural implement may, for instance, depend upon the capabilities and/or controllably functionality of the agricultural implement.

In particular, the control system may be communicatively coupled to the agricultural implement so as to control and/or define an operation of the agricultural implement. For instance, the control system may be configured to provide one or more control signals to the agricultural implement so as to control the function and/or operation of the agricultural implement.

In some examples, the control system may be configured to control whether or not the agricultural implement is activated responsive to the indicator of plant population in the target region.

For instance, the control system may be configured to, when the interaction zone overlaps the target region: activate the agricultural implement responsive to the indicator of plant population indicating that the plant population in the target region is below a first threshold population; and deactivate the agricultural implement responsive to the predicted indicator of plant population indicating that the plant population in the target region is above the first threshold population.

This approach may be performed with binary, categorical, or numeric indicators of plant population.

For instance, for a binary indicator, the control system may activate the agricultural implement when the binary indicator takes a first value (e.g., representing a "low density" or "no plants detected" state), which corresponds to the plant population in the target region being below the first threshold. Conversely, it may deactivate the implement when the indicator takes a second, different value (e.g., representing a "high density" or "plants detected" state), which corresponds to the plant population being the threshold.

As another example, for a categorical indicator, the control system may activate the agricultural implement when the categorical indicator indicates a category of lower plant populations (e.g. "low" or "medium" density), which corresponds to the plant population in the target region being below the first threshold. The control system may deactivate the implement when the indicator indicates a category of lower plant populations (e.g. "high" density), which corresponds to the plant population in the target region being above the first threshold.

As another example, for numeric indicators, the control system may simply compare the numeric value directly to the first threshold population. It may activate the agricultural implement when the numeric indicator is below the threshold value, and deactivate it when the indicator is above the threshold value.

In each case, the control system functions to interpret the indicator value in relation to the first threshold population to determine whether to activate or deactivate the agricultural implement as the interaction zone overlaps the target region.

The foregoing approach provides a binary mechanism for controlling the operation of the agricultural implement (e.g., active or inactive). However, more granular control techniques may be used where the agricultural task performable using the agricultural implement is one with variable properties. In such scenarios, the control system may implement a variable rate application strategy, where the rate and/or amount of input application (e.g., seeds, plants, fertilizer, pesticides, ploughing size) performed by the agricultural implement is dynamically adjusted responsive to the indicator of plant population.

A number of example control techniques performable when the agricultural implement comprises a planter are hereafter described.

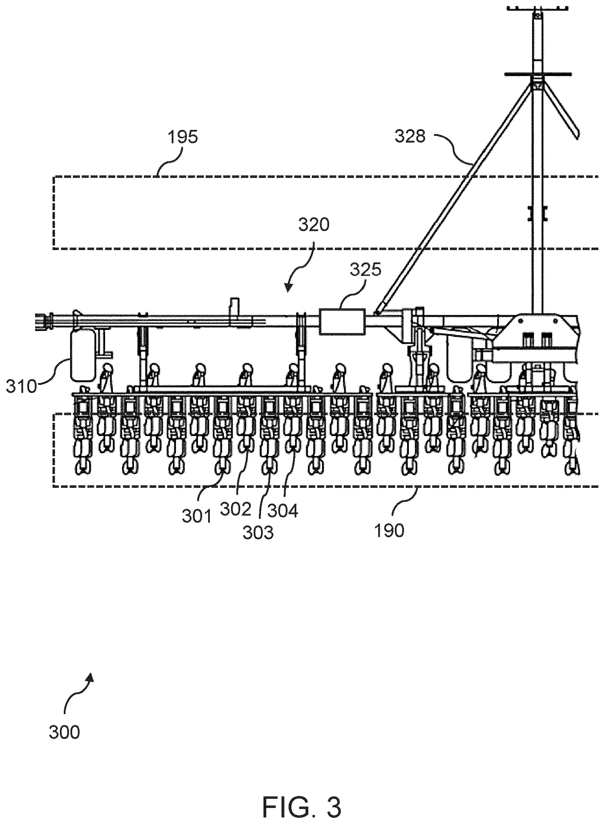

For improved contextual understanding, FIG. 3 illustrates a portion of an example planter 300. The planter 300 comprises a plurality of individual planting units 301, 302, 303, a wheel 310 and planting apparatus 320 for structurally supporting the planting unit(s) and/or controlling a position of the planting unit(s), as later described.

In some examples, the control system is configured to control, when the interaction zone overlaps the target region and the agricultural implement is activated, a rate of crop planting performed by the agricultural implement responsive to the indicator of plant population in the target region, wherein the rate of crop planting is non-zero.

In particular, the control system may be configured to control, when the interaction zone overlaps the target region, the rate of crop planting performed by the agricultural implement to be greater when to the indicator of plant population in the target region indicates a lower plant population than when the indicator of plant population in the target region indicates a higher plant population (e.g., to reduce a risk of overcrowding).

One approach to controlling the rate of crop planting is to control the spacing between planted crop responsive to the indicator of plant population. For instance, in a target region with a higher existing plant density, the system may increase the spacing between newly planted crop to reduce competition for resources. In a target region with lower plant density, the spacing may be decreased to maximize land utilization.

Another approach to controlling the rate of crop planting is to control the number of active planting units 301, 302, 303, 304 within the planter 300. In particular, as illustrated in FIG. 3, a planter may comprise a plurality of individual planting units 301, 302, 303, 304, each configured to plant crop. The control system may be configured to, when the interaction zone overlaps the target region, control how many of these individual planting units are active responsive to the indicator of plant population in the target region.

Another approach to controlling the rate of crop planting is to adjust the rate at which individual planting units of the planter plant crop (e.g., modify the amount of crop seed/plant planted per unit time). In regions with lower existing plant density, a higher seeding/planting rate may be used to achieve a desired plant population. In areas with higher existing plant density, a lower seeding rate may be employed to prevent overcrowding.

In some examples, the control system is configured to control, when the interaction zone overlaps the target region, the position at which the crop is planted with respect to the agricultural vehicle responsive to the indicator of plant population. The position at which the crop is planted may be defined as a lateral position with respect to the agricultural vehicle.

By way of example, the plant the crop along one or more first predetermined lines defined with respect to the agricultural vehicle responsive to the predicted indicator of plant population indicating that the plant population in the target region is below a second threshold population; and plant the crop at one or more second predetermined lines defined with respect to the agricultural vehicle responsive to the predicted indicator of plant population indicating that the plant population in the target region is above a second threshold population, wherein each second predetermined line is offset from each first predetermined line.

The precise mechanism used by the agricultural implement to adjust the position(s) at which the crop is planted (responsive to a control by the control system) may be application-specific and is immaterial to the proposed approach.

Some example approaches are hereafter described. In the context of such approaches, it is noted that the agricultural implement may comprise a plurality of planting units 301, 302, 303, 304, which are laterally displaced from one another are each configured to plant crop and are each separately controllably responsive to control signals provided by the control system.

The agricultural implement 300, for instance the planting apparatus 320, may be equipped with one or more mechanisms 325 to shift the planting units side-to-side. For instance, the agricultural implement 300 may include a row unit shifter mechanism 325 that allows for lateral adjustment of individual planting units or groups of planting units. This mechanism may comprise one or more hydraulic cylinders, electric actuators, or mechanical linkages to move the planting units side-to-side relative to a main frame 328 of the implement. The control system may send signals to the row unit shifter 325 to adjust the lateral position of planting units responsive to the indicator of plant population.

In some examples, the control system may control which planting units are activated, such that a first set of agricultural units 301, 303 may be activated to plant crop along one or more first predetermined lines and a second set 302, 304 of agricultural units may be activated to plant crop along one or more second predetermined lines. In this approach, the planting units are laterally displaced from one another. Thus, in this approach, the control system is able to selectively activate or deactivate specific planting units to plant crop along desired predetermined lines responsive to the plant population indicator.

Each first predetermined line may be a line along which existing crop was planted. Thus, the agricultural vehicle may store or retrieve planting information that identifies where crop was initially planted (e.g., with respect to a path of the agricultural vehicle) during an earlier planting procedure. The control system may access this stored planting data to determine the first predetermined lines corresponding to existing crop rows.

This reduces a risk that new crop will overplant existing crop when there is sufficient crop population. By planting along the first predetermined lines when the plant population is below the second threshold, the system may fill in gaps or areas of low density in existing crop rows. When the plant population is above the second threshold, planting along offset second predetermined lines helps avoid overcrowding and competition for resources.

In some cases, the control system may perform, when the interaction zone overlaps the target region, more granular positioning control responsive to the indicator of plant population. For example, the lateral offset of the second predetermined lines from the first predetermined lines may be variable and proportional to the detected plant density. A higher detected density may result in a larger lateral offset to provide more space between existing and newly planted crops.

For the sake of completeness, some approaches that may be exploited by the control system to control agricultural implements that are able to perform other agricultural tasks are hereafter described.

It is noted that the crop planted by the planter may differ from the existing crop for which the indicator of plant population is determined.

For instance, the planted crop may be a faster-growing variant of the existing crop, which could allow for more efficient use of the growing season or enable both the existing crop and the newly planted crop to be mature at a same time so that it may be harvested at a same time.

As another example, the planted crop may be a different cultivar or hybrid of the same species as the existing crop, e.g., selected for specific traits such as disease resistance, drought tolerance, or improved nutritional content. Alternatively, the planted crop could be an entirely different species chosen to complement the existing crop in a companion planting or crop rotation strategy.

By way of example, when the agricultural implement comprises a sprayer, then the control system may be configured to, when the interaction zone overlaps the target region, control the rate or amount of spraying performed by the agricultural implement responsive to the indicator of plant population in the target region. For instance, the control system may adjust the flow rate of sprayed materials (e.g., fertilizers, pesticides, herbicides) responsive to the indicator of plant population. In areas with higher plant density, the system may increase the spray rate to ensure adequate coverage of the denser vegetation. Conversely, in areas with lower plant density, the spray rate may be reduced to avoid over-application and potential waste of resources.

As another example, when the agricultural implement comprises a sprayer, then the control system may be configured to, when the interaction zone overlaps the target region, adjust the spray pattern or nozzle configuration of the sprayer responsive to the plant population indicator. For example, in target regions of higher plant density, the system may activate additional spray nozzles or adjust the spray pattern to provide more thorough coverage. In target regions of lower plant density, fewer nozzles may be activated, or the spray pattern may be modified for lower plant densities.

As another example, when the agricultural implement comprises a sprayer, then the control system may be configured to, when the interaction zone overlaps the target region, modify the composition or type of material being sprayed responsive to the plant population indicator. For instance, in a target region with higher plant density, a different fertilizer blend or pesticide formulation may be applied compared to target regions with lower plant density, to address the specific needs of the crop in those different conditions.

When the agricultural implement comprises a plough or other tillage tool, the control system may adjust the ploughing/tillage depth, intensity, or pattern responsive to the plant population indicator. In a target region with higher plant density, the system may increase tillage depth or intensity to manage increased crop residue. In a target region with lower plant density, tillage may be less aggressive to preserve soil structure and moisture.

As yet another example, when the agricultural implement comprises a harvester, the control system may adjust one or more harvesting parameters responsive to the plant population indicator. In a target region with higher plant density, the control system may increase the speed of the harvester's cutting or threshing mechanisms to handle the increased volume of plant material. Conversely, in a target region with lower plant density, the harvesting speed may be reduced to ensure thorough collection of available crops.

Of course, a combination of any of the above described approaches for controlling the operation of the agricultural implement may be used. The above described approaches are not considered to be exhaustive, and other examples will be apparent to the skilled person.

It has previously been described how the control system is configured to control the operation of the agricultural implement when the interaction zone overlaps the target region.

As such, the control system may be configured to determine a point in time at which the interaction zone overlaps the target region, and initiate control of the operation of the agricultural implement responsive to the indicator of plant population at this point in time.

Similarly, the control system may be configured to determine a time period or time window during which the interaction zone overlaps the target region, and control the operation of the agricultural implement responsive to the indicator of plant population only during this time period.

For improved ease of processing and efficiency, the target region may be a region that is ahead of the interaction zone when the digital image is captured by the camera. In this context, the term "ahead" refers to a position that is distanced from the interaction zone in a direction of forward travel of the agricultural vehicle. This increases a likelihood that the interaction zone will overlap the target region.

Referring back to Figure 2, in a simple example, the target region 195 may be positioned at a fixed and known distance D1 from the interaction zone 190. The digital image captured by the camera 120 may be associated with a specific capture time, which may be recorded as a timestamp. To identify when the interaction zone 190 overlaps with the target region 195, the control system may use the speed of the agricultural vehicle, which can be trivially derived from a speedometer or satellite-navigation unit (or similar unit) of the agricultural vehicle. By considering the known distance between the target region and interaction zone, along with the vehicle's speed, the control system can calculate an overlap time. This overlap time represents the point at which the interaction zone is expected to reach and overlap with the previously imaged target region.

The control system may use this calculated overlap time to determine when to initiate control of the agricultural implement responsive to the indicator of plant population derived from the earlier captured image. This approach allows the system to anticipate and prepare for upcoming changes in plant population.

In some examples, the control system may calculate a time period during which the interaction zone overlaps the target region, i.e., an overlap period. This calculation may make use of a known size or length of the target region.

For instance, the control system may use the speed of the agricultural vehicle to estimate the time it will take for the agricultural vehicle to travel from its current position to the start of the target region. This provides a start time for the overlap period. The control system may then calculate an end time for the overlap period by processing the length of the target region and the speed of the agricultural vehicle. For example, if the target region is 10 meters long and the vehicle is traveling at 5 meters per second, the overlap period would last approximately 2 seconds.

In a more sophisticated approach, the control system may utilize absolute or geographic positioning to determine when the interaction zone overlaps with the target region. This method may provide greater precision, especially in cases where the agricultural vehicle's path is not linear or constant.

The control system may determine the absolute or geographic position of the target region responsive to a known relationship between the relative location of the target region and the geographic position of the agricultural vehicle. This known relationship may result from a known or fixed field of view of the camera capturing the digital image.

The geographic position of the agricultural vehicle may be obtained using a position tracking device, such as a satellite-tracking receiver (e.g., a Global Positioning System (GPS) receiver) and/or a beacon-based tracking system and/or a trilateration-based system (e.g., trilaterating a position responsive to signal strength to each of a plurality of beacons or cell towers).

Similarly, the relative position of the interaction zone with respect to the geographic position of the agricultural vehicle may be known in advance. This information may be responsive to the physical dimensions and configuration of the agricultural vehicle and its implements.

In this approach, as the agricultural vehicle moves, the control system continuously tracks the geographic position of the agricultural system. By extension, this allows the system to track the geographic position of the interaction zone, since its relative position to the vehicle is known. The control system may then compare the tracked position of the interaction zone to the determined geographic position of the target region. This comparison allows the system to detect whether or not there is an overlap between the two areas.

In some implementations, the control system may create a geographic map or grid of the field, with different regions of the map/grid being associated with specific geographic coordinates. The target regions may be mapped onto this map/grid responsive to the captured images and the vehicle's position at the time of capture. As the interaction zone moves across the grid, the system can easily determine when it enters a cell corresponding to a previously imaged target region.

The geographic map or grid created by the control system may, by itself, contain valuable information for an agricultural user. For instance, the map or grid may provide a comprehensive overview of plant population distribution across the field, which can be useful for agricultural planning and management purposes. The map or grid may indicate areas of high and low plant density and/or identify where additional agricultural tasks have been performed responsive to determined indicators of plant population.

In some examples, the control system may be configured to output the geographic map or grid to an external device or memory. This output may be performed via a transceiver or other communication interface of the agricultural vehicle. The external device may be a user device such as a smartphone, tablet, or laptop computer, or it may be a remote server or cloud storage system.

By outputting the geographic map, the control system enables agricultural users to access and analyze the collected data. This may allow for more detailed analysis, long-term planning, or sharing of information with other stakeholders such as agronomists or farm managers. The map data may also be integrated with other farm management software or systems.

In some cases, the control system may update the geographic map in real-time as the agricultural vehicle moves through the field, captures new digital images and produces new indicators of plant population. These updates may be continuously transmitted to the external device or memory, allowing for real-time monitoring of field conditions from a remote location.

This more sophisticated approach also allows for more accurate timing of implement control actions, as the system can precisely determine when the interaction zone enters and exits each target region. It also enables the system to handle non-linear paths more effectively. For example, if the agricultural vehicle needs to navigate around obstacles or follow contours in the field, the system can still accurately determine when the interaction zone overlaps with previously imaged target regions, regardless of the path taken between imaging and interaction.

It has previously been described how the control system is configured to process the digital image to produce an indicator of plant population. A number of example approaches for performing such a procedure are hereafter described. The control system may employ any one or more of these processes to determine the indicator of plant population.

A first set of example approaches makes use of a machine-learning method to generate the indicator of plant population.

Where relevant, any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

The skilled person will appreciate how different forms of known input and output data can be used depending upon the function or purpose of the machine-learning algorithm.

It is not essential that the machine learning algorithm(s) be trained by the agricultural vehicle and/or control system thereof. Rather, the machine-learning algorithm(s) may be trained in advance of their usage (i.e., exploited for performing inference) by the control system. More specifically, the machine-learning algorithm(s) may be trained by a dedicated training processing system, such as a cloud-based processing system, external to the agricultural vehicle. The trained machine-learning algorithm(s) may be installed within the agricultural vehicle using any suitable or known means.

One example approach that makes use of a machine-learning method to generate the indicator of plant population is hereafter described. The machine-learning method may be employed to process the digital image and determine the indicator of plant population. This method may be configured to accept the digital image captured by the camera as input data. After processing the image through its trained algorithms, the machine-learning method then outputs the indicator of plant population for the target region represented in that image.

For use in the above-described approach, during training of the machine-learning method using a supervised learning technique, the known input data comprises example digital images. The corresponding known output data comprises, for each digital image, an indicator of plant population (e.g., a measure of plant density) in the region represented by the digital image. In particular, the indicator of plant population may be an indicator of a plant population of a specific/desired crop.

An alternative example approach that makes use of a machine-learning method to generate the indicator of plant population is hereafter described. This approach comprises configuring the machine-learning method to receive the digital image as input and provide object identifying information as output. This object identifying information identifies (e.g., a location of) one or more plants within the digital image. Subsequently, the object identifying information undergoes processing to generate the indicator of plant population. For instance, this processing may involve counting the number of identified plants or calculating their density within the image.

For use in the above-described approach, during training of the machine-learning method using a supervised learning technique, the known input data comprises example digital images. The corresponding known output data comprises, for each digital image, an identification of a part of the digital image representing a plant (and preferably, a specific plant or crop) in the region represented by the digital image.

Another set of example approaches do not make use of a machine-learning method.

By way of example, the digital image may be processed using an object detection algorithm or segmentation algorithm to generate object identifying information, which again identifies (e.g., a location of) one or more plants within the digital image. Example object detection algorithms include image thresholding or color-based segmentation techniques, (e.g., to distinguish green plant material from soil), template matching algorithms (e.g., to identify regions of the digital image similar to a template image of a plant), blob detection algorithms and so on.

Alternative approaches for processing a digital image to determine an indicator of plant population within a target region (represented in the digital image) will be apparent to the skilled person.

It will be appreciated that the agricultural vehicle may continually or iteratively repeat the aforementioned functions or tasks, in order to effectively continually monitor different target regions and control the agricultural implement accordingly.

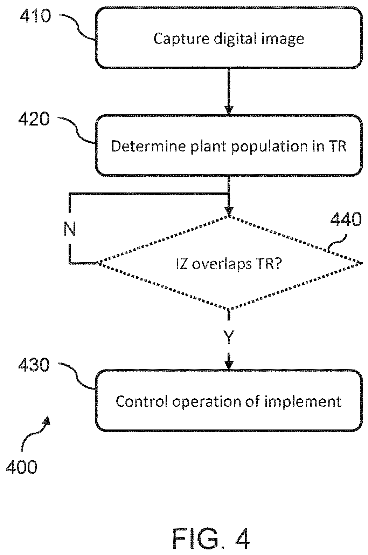

Figure 4 is a flowchart illustrating a method 400 for controlling an agricultural implement configured to perform an agricultural task within an interaction zone (IZ) in the vicinity of an agricultural vehicle.

The method comprises (an act of) capturing 410, using a camera, a digital image of a target region in the vicinity of the agricultural vehicle.

The method 400 also comprises (an act of) processing 420, using a control system, the digital image to determine an indicator of plant population in the target region.

The method 400 also comprises (an act of), when the interaction zone overlaps the target region, controlling 430, using the control system, the operation of the agricultural implement responsive to the indicator of plant population in the target region (TR).

Accordingly, the method 400 may comprise (an act of) determining 440 whether or not the interaction zone (IZ) overlaps the target region (TR). Responsive to determining that the interaction zone overlaps the target region, act 430 is performed. Otherwise, act 430 is not performed, e.g., the method 400 hangs at step 440 until the interaction zone overlaps the target region. Approaches for performing this process have been previously described.

The method 400 may be adapted to perform the function(s) of any herein disclosed agricultural vehicle and vice versa.

It will be appreciated, in practice, the method 400 is iteratively repeated. This facilitates the monitoring of target regions and continual control of the agricultural implement responsive to the target region with which the interaction zone currently overlaps.

Embodiments described herein make use of a control system that may be implemented through various combinations of software and hardware to execute the required functionalities. One implementation may involve a processor-based control system, where one or more microprocessors are programmed with software (such as microcode) to carry out the necessary functions. However, the control system is not limited to processor-based implementations. It may be realized without processors or as a hybrid system combining purpose-built hardware for certain tasks with processors (e.g., programmed microprocessors and their associated circuits) for other functions.

The control system may incorporate various components in different embodiments of this disclosure. These components may include, but are not restricted to, standard microprocessors, application-specific integrated circuits (ASICs), and field-programmable gate arrays (FPGAs).

It will be understood that disclosed methods are preferably computer-implemented methods. As such, there is also proposed the concept of a computer program comprising code means for implementing any described method when said program is run on a system comprising a processing system and camera. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural vehicle comprising:
an agricultural implement configured to perform an agricultural task within an interaction zone in the vicinity of the agricultural vehicle;
a camera configured to capture a digital image of a target region in the vicinity of the agricultural vehicle;
a control system configured to:
process the digital image to determine an indicator of plant population in the target region; and
when the interaction zone overlaps the target region, control the operation of the agricultural implement responsive to the indicator of plant population in the target region.

2. The agricultural vehicle of claim 1, wherein the control system is configured to control whether or not the agricultural implement is activated responsive to the indicator of plant population in the target region.

3. The agricultural vehicle of claim 2, wherein the control system is configured to, when the interaction zone overlaps the target region:
activate the agricultural implement responsive to the indicator of plant population indicating that the plant population in the target region is below a first threshold population; and
deactivate the agricultural implement responsive to the indicator of plant population indicating that the plant population in the target region is above the first threshold population.

4. The agricultural vehicle of any one of claims 1 to 3, wherein the indicator of plant population is a measure of predicted plant density in the target region.

5. The agricultural vehicle of any one of claims 1 to 4, wherein the control system is configured to process the digital image using a machine-learning method to generate the indicator of plant population in the target region.

6. The agricultural vehicle of any one of claims 1 to 5, wherein the agricultural implement is a planter configured to plant crop.

7. The agricultural vehicle of claim 6, wherein the control system is configured to control, when the interaction zone overlaps the target region and the agricultural implement is activated, a rate of crop planting performed by the agricultural implement responsive to the indicator of plant population in the target region, wherein the rate of crop planting is non-zero.

8. The agricultural vehicle of claim 7, wherein the control system is configured to control, when the interaction zone overlaps the target region:
the rate of crop planting performed by the agricultural implement to be greater when to the indicator of plant population in the target region indicates a lower plant population than when the indicator of plant population in the target region indicates a higher plant population.

9. The agricultural vehicle of any one of claims 6 to 8, wherein the control system is configured to control, when the interaction zone overlaps the target region, the position at which the crop is planted with respect to the agricultural vehicle responsive to the indicator of plant population.

10. The agricultural vehicle of claim 9, wherein the control system is configured to, when the interaction zone overlaps the target region and the agricultural implement is activated:
plant the crop along one or more first predetermined lines defined with respect to the agricultural vehicle responsive to the indicator of plant population indicating that the plant population in the target region is below a second threshold population; and
plant the crop at one or more second predetermined lines defined with respect to the agricultural vehicle responsive to the indicator of plant population indicating that the plant population in the target region is above a second threshold population, wherein each second predetermined line is offset from each first predetermined line.

11. The agricultural vehicle of claim 10, wherein each first predetermined line is a line along which existing crop was planted.

12. The agricultural vehicle of any one of claims 1 to 11, wherein the target region is a region that is ahead of the interaction zone when the digital image is captured by the camera.

13. The agricultural vehicle of any one of claims 1 to 12, wherein the control system is further configured to determine a time period during which the interaction zone overlaps the target region responsive to at least a travel speed of the agricultural vehicle.

14. The agricultural vehicle of any one of claims 1 to 13, wherein the camera is fixedly mounted to a remainder of the agricultural vehicle.

15. A method for controlling an agricultural implement configured to perform an agricultural task within an interaction zone in the vicinity of an agricultural vehicle, wherein the method comprises:
capturing, using a camera, a digital image of a target region in the vicinity of the agricultural vehicle;
processing, using a control system, the digital image to determine an indicator of plant population in the target region; and
when the interaction zone overlaps the target region, controlling, using the control system, the operation of the agricultural implement responsive to the indicator of plant population in the target region.

16. The method of claim 15, wherein controlling the operation of the agricultural implement comprises controlling whether or not the agricultural implement is activated responsive to the indicator of plant population in the target region.
